# EUROPEAN PATENT SPECIFICATION

(11) **EP 3 272 643 B1**
(45) Date of publication and mention of the grant of the patent: **10.11.2021**
(21) Application number: 16180294.7
(22) Date of filing: 20.07.2016
(51) Int. Cl.: B64C 1/10, B64C 1/34, B64D 11/00

(54) **AIRCRAFT OR SPACECRAFT PASSENGER CABIN PARTITION**
PASSAGIERKABINENABTRENNUNG FÜR EIN LUFTFAHRZEUG ODER RAUMFAHRZEUG
SÉPARATION DE CABINE PASSAGERS D'UN AÉRONEF OU D'UN VÉHICULE SPATIAL

(43) Date of publication of application: 24.01.2018
(73) Proprietor: Airbus Operations GmbH, 21129 Hamburg (DE)
(72) Inventor: Hegenbart, Matthias, 21129 Hamburg (DE); Schaefer, Bastian, 21129 Hamburg (DE); Johannsen, Martin M., 21129 Hamburg (DE)
(74) Representative: Isarpatent

(56) References cited:
- EP-A1- 2 942 268
- WO-A1-03/005861
- WO-A1-2016/091907
- DE-A1- 3 844 080
- US-A- 4 899 962
- US-A- 5 062 589
- US-A1- 2013 020 369

## Description

The present invention relates to an aircraft or spacecraft passenger cabin partition, and to an aircraft or spacecraft which includes such a partition.

Partitions and class dividers are installed in the passenger compartments of commercial passenger aircraft to divide those passenger compartments into different sections or regions. The partitions typically comprise honeycomb sandwich panels which may be covered with a decor film and/or may include aluminium trim for protecting exposed edges of the panel. The lower portions of the partitions are attached to seat rails and the upper portions are attached to the PSC (under bin) or to the aircraft secondary structure (full height). Typically, the partitions have a thickness of 28mm, whereas their height depends on the ceiling and the hat-rack configuration of the aircraft. A distance to the cabin lining is usually a minimum of one inch (i.e. 25 mm), and the distance to OHSC-parts is usually about 40 mm. The partitions are often employed as class dividers (i.e. for dividing the passenger cabin or compartment of an aircraft into different class sections), but the partitions can also accommodate emergency equipment and/or electrical equipment.

In aircraft and spacecraft design and construction, efforts are continually being made to enhance and improve production efficiency and costs, passenger safety, and to reduce overall weight while maintaining or improving component performance.

Document EP2942268 discloses a selectively inflatable and deflatable partition element mounted in an aircraft passenger cabin. Document WO03/005861 discloses an inflatable structure provided with rigid reinforcing bands.

It is therefore an object of the present invention to provide a new and improved 2. aircraft or spacecraft passenger cabin partition.

In accordance with one aspect of the present invention, an aircraft or spacecraft passenger cabin partition is provided having the features recited in claim 1. Preferred features are recited in the dependent claims.

In this regard, it will be noted that the term "membrane" as used herein may be understood as a relatively pliable sheet of material. The membrane may comprise a synthetic film or foil, but may also comprise a woven or non-woven fabric or textile material, optionally coated by a sealing layer. The flexible membrane is preferably comprised of a synthetic material selected from the group consisting of polyester, nylon, polyethylene terephthalate, polyurethane, polyamide, and para-aramid synthetics, such as Kevlar™.

The invention has the advantage that the flexible membrane and/or flexible envelope has the potential to provide the partition with a very low-mass or light-weight structure compared to conventional honeycomb aluminium partition structures or even fibre-reinforced polymer foam core sandwich structures. The more flexible and resilient nature of an inflated partition according to the invention also offers significantly improved behaviour in the event of a rapid decompression or crash with more advantageous head-impact criteria. The partition of the invention also provides branding and display opportunities.

In order to inflate or pressurize the at least one chamber of the partition, the partition preferably employs a pressurized air supply system typically available in aircraft and spacecraft. That is, aircraft generally have access to a supply of pressurized air from the compressors of their jet turbines, which are also employed to pressurize the cabin space for flights at altitude.

In a preferred embodiment, the flexible membrane or flexible envelope defines or encloses a plurality of chambers, each of which is configured to be inflated or pressurized to stiffen the partition in use. Preferably, the plurality of chambers is/are arranged adjacent or side-by-side one another. The inflatable chambers are typically elongate or long and desirably extend generally parallel to one another over substantially the entire areal expanse of the partition.

In a preferred embodiment, each of the bands may comprise any one or more of a strap, belt, cord, or cable. In this way, the partition may employ the "tensairity" principle by using pneumatic pressure (typically relatively low air pressure) to stabilize and to stiffen the partition against buckling. Thus, it may employ one or more inflated "air-beam" with bands (such as belts or cables) attached stiffeners, thereby gaining an advantage for low mass.

In a preferred embodiment, the partition comprises one or more panel which includes, or is at least partially defined by, a frangible or breakable seam. This, the seam is designed to have a predetermined rupture strength. In this way, the seam may be configured to break or tear open in the event of a rapid decompression. In doing so, the panel may be configured either to pivot in the manner of a flap or to be completely extracted or removed from the partition, thereby to open an air-flow path through the partition.

In a preferred embodiment, the partition comprises at least one pressure relief valve to release excess pressure in the inflated or pressurized chamber (s) in the event of an over-inflation or an over-pressurization of the partition.

In a preferred embodiment, the partition further includes an electronic control unit mounted on a front and/or rear facing side of the partition.

In a preferred embodiment, the partition includes a foldable, collapsible, or re-tractable seat mounted on a facing side of the partition. The seat is desirably mounted on or supported by a plurality of reinforcing bands connected to or integrated in the flexible membrane. In this way, the seat could be configured as a cabin attendant seat typical in a commercial passenger aircraft, or as a troop seat typical in a military transport aircraft.

According to another aspect, the invention provides an aircraft or spacecraft having a cabin or compartment and one or more partition of the invention, especially according to any of the embodiments described above, which at least partially divides the cabin or compartment into sections.

For a more complete understanding of the invention and the advantages thereof, exemplary embodiments of the invention are explained in more detail in the following description with reference to the accompanying drawing figures, in which like reference characters designate like parts and in which:
- Fig. 1: is a sketch of an aircraft cabin or compartment having partitions according to an embodiment of the invention;
- Fig. 2: is a sketch of a perspective view of a partition according to an embodiment of the invention;
- Fig. 3: is a sketch of a cross-section view of a partition according to an embodiment of the invention;
- Fig. 4: is a sketch in a partial perspective view of the partition in Fig. 3;
- Fig. 5: is a sketch of a cross-section view of a partition according to another embodiment of the invention;
- Fig. 6: is a sketch of a cross-section view of a partition according to a further embodiment; and
- Fig. 7: shows an aircraft according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as it accorded to such terms and expressions with respect to their corresponding respective areas of inquiry and study, except where specific meanings have otherwise been set forth herein.

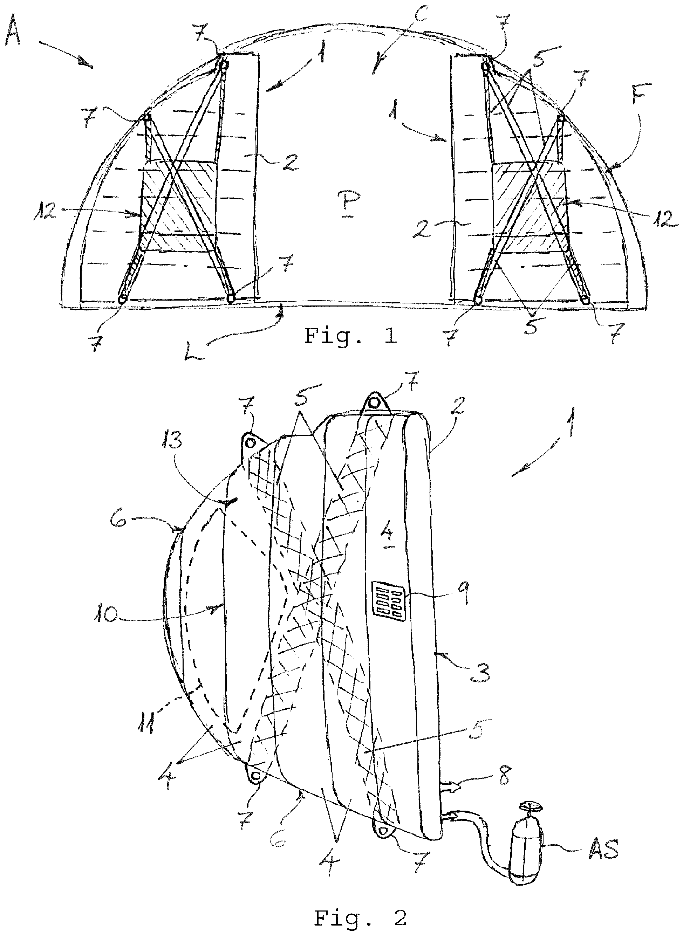

With reference firstly to Fig. 1 of the drawings, a cabin or compartment C of an aircraft A is illustrated schematically bounded within a hemi-cylindrical fuselage F and by a floor structure L of the aircraft. Two partitions 1 according to an embodiment of the invention are installed to least partially divide the cabin or compartment C in a longitudinal direction of the fuselage F into sections. A central passage P is left open, e.g. as an aisle, for access between the sections.

Referring also to drawing Fig. 2, details of each partition 1 according to a preferred embodiment of the invention will be explained. The partition 1 comprises a flexible membrane 2 which extends over substantially an entire areal expanse of the partition 1 and forms a flexible envelope 3 which defines or encloses a plurality of chambers 4 that are configured to be inflated or pressurized to stiffen the partition 1 in use. The membrane 2 or envelope 3 is formed from a relatively pliable sheet of synthetic material selected from the group consisting of nylon, polyester, polyethylene terephthalate, polyurethane, polyamide, and para-aramid synthetics, such as Kevlar™.

As can be seen in Fig. 2, the plurality of chambers 4 defined or enclosed by the flexible membrane 2 or flexible envelope 3 are elongate and are arranged adjacent to one another or in a side-by-side relationship extending generally parallel over substantially the entire areal expanse of the partition. The partition 1 furthermore comprises reinforcing bands 5 which extend across and reinforce the envelope 3. The bands 5 are connected to, or integrated in, the flexible membrane 2, and comprise woven straps or belts adapted for tensile loading. Thus, these bands or tension elements 5 are desirably made of high performance fibres, such as dyneema, graphene, aramid, or carbon fibre. In this way, the bands 5 act to structurally stabilize the inflated or pressurized partition 1 in service. Upper and lower edge regions 6 of the partition are provided with one or more connecting elements 7 (e.g. anchor points, lugs or loops) at which the partition 1 can then be securely fastened to corresponding connecting members (not shown) on an internal structure of the fuselage F (e.g. seat rails in the floor structure L). Preferably, each of the connecting elements or anchor points 7 is provided in a region of a respective reinforcing band 5 for structural stability.

The partition 1 itself may be shaped or configured to suit the particular space or application, as required. That is, the two-dimensional shape or areal form of the partition 1 is essentially unlimited. In order to inflate or pressurize the chambers 4 of the partition 1, a pressurized air supply AS typically available in the aircraft A is employed. Also, the partition 1 includes at least one pressure relief valve 8 to release excess pressure in the event of an over-inflation or an over-pressurization of the partition. To this end, it will be noted that the degree of inflation or pressurization of the partition 1 required will vary with the ambient pressure within the cabin C. As the ambient pressure in the cabin C is subject to variation during the course of a flight (e.g. with varying altitude), the partition 1 may include an electronic control unit 9 for monitoring the pressure in the partition 1 relative to the ambient pressure in the cabin C. In this way, the control unit 9 may operate to admit additional pressure from the air supply AS to the chambers 4 and/or to release air pressure from the chambers 4 via the relief valve(s) 8.

Referring further to Fig. 2, the partition 1 can be seen to include a panel 10 which is at least partially defined by a frangible or breakable seam 11. The seam 11 is designed with a known rupture strength such that the seam 11 is configured to break or tear open in the event of a rapid decompression in the aircraft cabin C. Thus, as the seam 11 ruptures, the panel 11 is configured to pivot open in the manner of a flap or to be removed from the partition 1 completely to open an air-flow path through the partition 1.

The only apparent difference between the partitions 1 shown in Fig. 1 and Fig. 2 is that, in the embodiment of Fig. 1 the elongate air chambers 4 of each partition 1 extend generally horizontally, whereas in the embodiment of Fig. 2 the air chambers 4 of each partition 1 extend generally vertically. It will also be noted in Fig. 1 that the partition 1 includes a foldable, collapsible, or re-tractable seat 12 mounted on a facing side 13 of the partition 1. The seat 12 is desirably mounted on, or supported by, reinforcing bands 5 connected to or integrated in the flexible membrane 2. The seat 12 may be configured as a cabin attendant seat typical in a commercial passenger aircraft, or as a troop seat typical in a military transport aircraft.

In addition, or as an alternative, to the seat 12, the facing side 13 of the partition 1 may include pockets or satchels (not shown) integral with or attached to the membrane 2 for holding magazines or brochures. Furthermore, the facing side 13 of the partition 1 may include one or more display screen (not shown) for transmitting information or entertainment to passengers in the cabin C.

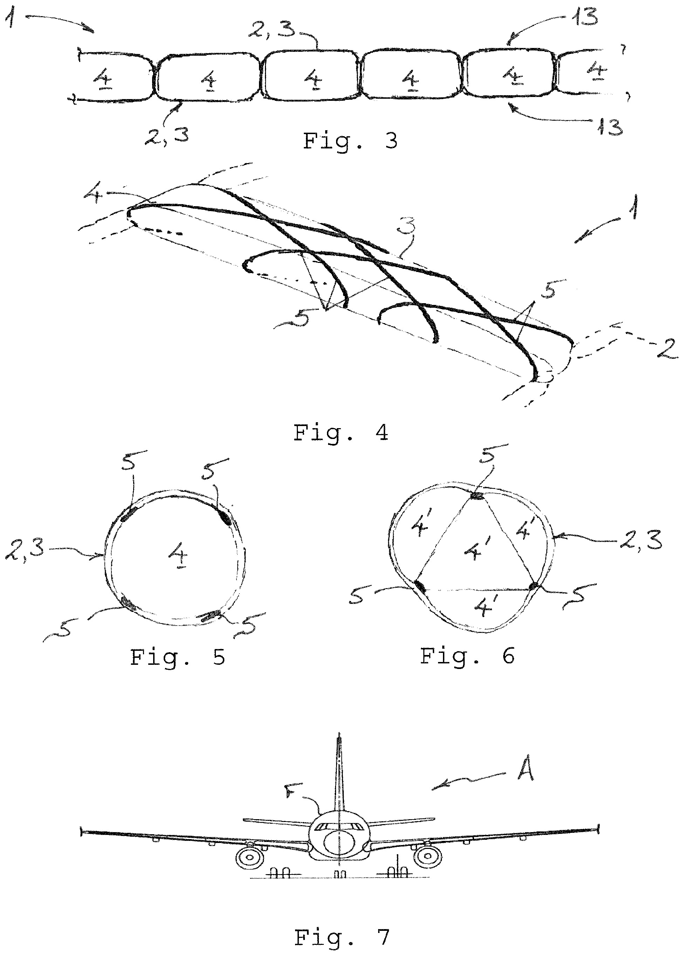

With reference now to Figs. 3 and 4 of the drawings, examples of the configuration of individual pressure chambers 4 in the partition 1 are illustrated. The generally rectangular cross-section shown in Fig. 3 could correspond to the plurality of vertically extending chambers 4 in the partition 1 of Fig. 2. Fig. 4 shows an example of how overlapping cords or cables may be arranged and integrated on or around each chamber 4 to provide structural reinforcement and strength the partition 1 in an inflated or pressurized state.

Figs. 5 and 6 of the drawings illustrate further alternative configurations for the individual pressure chambers 4 in the partition 1. That is, the individual pressure chambers 4 may have a generally cylindrical form and may include reinforcing bands 5 integrated internally or within the membrane 2 or the envelope 3. Fig. 5 provides an example of a chamber 4 having a single inflatable cavity. Fig. 6, on the other hand, gives an example of a chamber 4 which is sub-divided by internal membranes into sub-chambers or sub-cavities 4'.

Although each partition 1 clearly has a thickness (i.e. in a longitudinal direction of the fuselage F), in the inflated or pressurized state it will be appreciated that this thickness dimension is relatively small compared with the height and width dimensions of the partition 1 (i.e. transverse to the longitudinal direction).

A further advantage of the partition 1 of the invention is that it may be readily demounted during service. That is, the air pressure may be released from the inflatable chambers 4 to collapse the partition 1 for demounting and/or folding the partition 1 out of the way. This may thereby provide space to enable large items, e.g. a stretcher, to be moved through the cabin C.

Although specific embodiments of the invention have been illustrated and described herein, it will be appreciated by those of ordinary skill in the art that a variety of alternate implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: partition
- 2: membrane
- 3: envelope
- 4: chamber
- 5: reinforcing band or tension element
- 6: edge regions of the partition
- 7: connecting element or anchor point
- 8: pressure relief valve
- 9: control unit
- 10: panel
- 11: frangible or breakable seam
- 12: seat
- 13: facing side of the partition
- A: aircraft
- F: fuselage
- C: cabin
- L: floor structure
- P: central passage
- AS: pressurized air supply

## Claims

1. An aircraft or spacecraft passenger cabin partition (1), comprising a flexible membrane (2), which forms a flexible inflatable envelope (3) extending over substantially an entire areal expanse of the partition (1) enclosing at least one chamber (4) configured inflatable to stiffen the partition (1), **characterised in that** the partition comprises a plurality of reinforcing bands (5), which extend across and reinforce the envelope (3), wherein the bands (5) are connected to or integrated in the flexible membrane (2), and wherein the bands (5) are configured for tensile loading, the partition further comprising connecting elements (7) provided on upper and lower edge regions (6) of the partition (1) for securely fastening the partition (1) to complementary connecting members on a fuselage of the aircraft or spacecraft, each of the connecting elements (7) being provided in a region of a respective reinforcing band (5).

2. A partition (1) according to claim 1, wherein the flexible membrane (2) defines multiple chambers (4), each of which is designed to be inflated or pressurized to stiffen the partition (1).

3. A partition (1) according to claim 2, wherein the multiple chambers (4) are arranged adjacent one another or side-by-side, wherein the chambers (4) are preferably elongate and preferably extend substantially parallel to one another over substantially the entire areal expanse of the partition (1).

4. A partition (1) according to any one of the preceding claims, wherein the bands (5) comprise any one or more of: straps, belts, cords, and cables.

5. A partition (1) according to any one of the preceding claims, further comprising one or more panel (10) which includes a frangible or breakable seam (11) configured to open in the event of a rapid decompression to open an air-flow path through the partition (1).

6. A partition (1) according to any one of the preceding claims, further comprising at least one pressure relief valve (8) to release excess pressure in the at least one chamber (4) in the event of an over-inflation or over-pressurization of the partition.

7. A partition (1) according to any one of the preceding claims, further including a control unit (9) mounted on a facing side (11) of the partition (1) for regulating pressure in the partition (1).

8. A partition (1) according to any one of the preceding claims, further comprising a foldable, collapsible, or retractable seat (12) mounted on a facing side (13) of the partition (1); wherein the seat (12) is desirably mounted on or supported by the reinforcing bands (5) connected to or integrated in the flexible membrane (2).

9. A partition (1) according to any one of the preceding claims, wherein the flexible membrane (2) is comprised of a synthetic material selected from a group consisting of: nylon, polyester, polyethylene terephthalate, polyurethane, polyamide, and para-aramid synthetics, such as Kevlar™.

10. An aircraft or spacecraft having a passenger cabin (C) and one or more partition (1) according to any one of the preceding claims which at least partially divides the cabin (C) into sections.

## Patentansprüche

1. Passagierkabinenabtrennung (1) für ein Luftfahrzeug oder ein Raumfahrzeug, umfassend eine flexible Membran (2), die eine flexible aufblasbare Hülle (3) bildet, die sich im Wesentlichen über eine gesamte Flächenausdehnung der Abtrennung (1) erstreckt und mindestens eine Kammer (4) einschließt, die zum Aufblasen ausgelegt ist, um die Abtrennung (1) zu versteifen, **dadurch gekennzeichnet, dass** die Abtrennung eine Vielzahl von Verstärkungsbändern (5) umfasst, die sich über die Hülle (3) erstrecken und diese verstärken, wobei die Bänder (5) mit der flexiblen Membran (2) verbunden oder in diese integriert sind, und wobei die Bänder (5) für Zugbelastung ausgelegt sind, die Abtrennung ferner Verbindungselemente (7) umfasst, die an oberen und unteren Randbereichen (6) der Abtrennung (1) dazu bereitgestellt sind, die Abtrennung (1) sicher an komplementären Verbindungselementen an einem Rumpf des Luftfahrzeugs oder des Raumfahrzeugs zu befestigen, wobei jedes der Verbindungselemente (7) in einem Bereich eines jeweiligen Verstärkungsbandes (5) bereitgestellt ist.

2. Abtrennung (1) nach Anspruch 1, wobei die flexible Membran (2) mehrere Kammern (4) definiert, von denen jede dazu bestimmt ist, aufgeblasen oder unter Druck gesetzt zu werden, um die Abtrennung (1) zu versteifen.

3. Abtrennung (1) nach Anspruch 2, wobei die mehreren Kammern (4) nebeneinander oder Seite an Seite angeordnet sind, wobei die Kammern (4) vorzugsweise länglich sind und sich vorzugsweise im Wesentlichen parallel zueinander über im Wesentlichen die gesamte Flächenausdehnung der Abtrennung (1) erstrecken.

4. Abtrennung (1) nach einem der vorhergehenden Ansprüche, wobei die Bänder (5) eines oder mehrere der folgenden Elemente umfassen: Bänder, Gurte, Schnüre und Kabel.

5. Abtrennung (1) nach einem der vorhergehenden Ansprüche, ferner umfassend eine oder mehrere Platten (10), die eine zerbrechliche oder aufbrechbare Naht (11) beinhaltet, die dafür ausgelegt ist, sich im Falle einer schnellen Dekompression zu öffnen, um damit einen Luftströmungsweg durch die Abtrennung (1) zu öffnen.

6. Abtrennung (1) nach einem der vorhergehenden Ansprüche, ferner umfassend mindestens ein Überdruckventil (8) zu dem Zweck, im Falle einer Überblähung oder eines Überdrucks der Abtrennung den Überdruck in der mindestens einen Kammer (4) abzulassen.

7. Abtrennung (1) nach einem der vorhergehenden Ansprüche, ferner beinhaltend eine Steuereinheit (9), die an einer Stirnseite (11) der Abtrennung (1) montiert ist, zu dem Zweck, Druck in der Abtrennung (1) zu regulieren.

8. Abtrennung (1) nach einem der vorhergehenden Ansprüche, ferner umfassend einen faltbaren, zusammenklappbaren oder einziehbaren Sitz (12), der an einer Stirnseite (13) der Abtrennung (1) montiert ist, wobei der Sitz (12) vorzugsweise an den Verstärkungsbändern (5), die mit der flexiblen Membran (2) verbunden oder in diese integriert sind, montiert ist oder von diesen getragen wird.

9. Abtrennung (1) nach einem der vorhergehenden Ansprüche, wobei die flexible Membran (2) aus einem synthetischen Material besteht, das ausgewählt ist aus der Gruppe bestehend aus: Nylon, Polyester, Polyethylenterephthalat, Polyurethan, Polyamid und para-Aramid-Synthetik, wie etwa Kevlar™.

10. Luftfahrzeug oder Raumfahrzeug mit einer Passagierkabine (C) und einer oder mehreren Abtrennungen (1) nach einem der vorhergehenden Ansprüche, die die Kabine (C) zumindest teilweise in Abschnitte unterteilen.

## Revendications

1. Cloison de cabine passagers d'aéronef ou d'engin spatial (1), comprenant une membrane flexible (2), qui forme une enveloppe gonflable flexible (3) s'étendant sur sensiblement une étendue spatiale entière de la cloison (1) enfermant au moins une chambre (4) configurée de façon gonflable pour raidir la cloison (1), **caractérisée en ce que** la cloison comprend une pluralité de bandes de renforcement (5), qui s'étendent en travers de, et renforcent, l'enveloppe (3), dans laquelle les bandes (5) sont raccordées à, ou intégrées dans, la membrane flexible (2), et dans laquelle les bandes (5) sont configurées pour charge de traction, la cloison comprenant en outre des éléments de raccordement (7) prévus sur des régions de bord supérieure et inférieure (6) de la cloison (1) pour fixer fermement la cloison (1) à des organes de raccordement complémentaires sur un fuselage de l'aéronef ou de l'engin spatial, chacun des éléments de raccordement (7) étant prévu dans une région d'une bande de renforcement respective (5).

2. Cloison (1) selon la revendication 1, dans laquelle la membrane flexible (2) définit de multiples chambres (4), dont chacune est conçue pour être gonflée ou mise sous pression pour raidir la cloison (1).

3. Cloison (1) selon la revendication 2, dans laquelle les multiples chambres (4) sont agencées de façon adjacente les unes aux autres ou côte-à-côte, dans laquelle les chambres (4) sont de préférence allongées et de préférence s'étendent de façon sensiblement parallèle les unes aux autres sur sensiblement l'étendue spatiale entière de la cloison (1).

4. Cloison (1) selon l'une quelconque des revendications précédentes, dans laquelle les bandes (5) comprennent un ou plusieurs quelconques de : sangles, courroies, cordons, et câbles.

5. Cloison (1) selon l'une quelconque des revendications précédentes, comprenant en outre un, ou plusieurs, panneau (10) qui inclut une couture pouvant être cassée ou rompue (11) configurée pour s'ouvrir dans le cas d'une décompression rapide pour ouvrir un chemin d'écoulement d'air à travers la cloison (1).

6. Cloison (1) selon l'une quelconque des revendications précédentes, comprenant en outre au moins une soupape de détente de pression (8) pour libérer un excès de pression dans l'au moins une chambre (4) dans le cas d'un sur-gonflage ou d'une mise sous pression excessive de la cloison.

7. Cloison (1) selon l'une quelconque des revendications précédentes, incluant en outre une unité de commande (9) montée sur un côté avant (11) de la cloison (1) pour réguler une pression dans la cloison (1).

8. Cloison (1) selon l'une quelconque des revendications précédentes, comprenant en outre un siège pliable, rabattable, ou rétractable (12) monté sur un côté avant (13) de la cloison (1) ; dans laquelle le siège (12) est, de façon souhaitable, monté sur, ou supporté par, les bandes de renforcement (5) raccordées à, ou intégrées dans, la membrane flexible (2).

9. Cloison (1) selon l'une quelconque des revendications précédentes, dans laquelle la membrane flexible (2) est composée d'un matériau synthétique sélectionné parmi un groupe constitué de : produits synthétiques en nylon, polyester, polyéthylène téréphtalate, polyuréthane, polyamide, et para-aramide, tels que du Kevlar™.

10. Aéronef ou engin spatial ayant une cabine passagers (C) et une, ou plusieurs, cloison (1) selon l'une quelconque des revendications précédentes qui divise au moins partiellement la cabine (C) en sections.
